Europäisches Patentamt

European Patent Office

Office européen des brevets

(11) Veröffentlichungsnummer: **0 285 803**
**A2**

## EUROPÄISCHE PATENTANMELDUNG

(21) Anmeldenummer: 88103035.7

(22) Anmeldetag: 01.03.88

(51) Int. Cl.⁴: **G02B 6/38**

(30) Priorität: 04.04.87 DE 3711457

(43) Veröffentlichungstag der Anmeldung:
12.10.88 Patentblatt 88/41

(84) Benannte Vertragsstaaten:
CH DE FR GB IT LI SE

(71) Anmelder: INOVAN GmbH & Co. KG Metalle
und Bauelemente
Industriestrasse 44
7534 Birkenfeld-Pforzheim(DE)

(72) Erfinder: Tilse, Wilhelm
Humboldtstrasse 20
D-7534 Birkenfeld(DE)

(74) Vertreter: Trappenberg, Hans
Postfach 1909,
D-7500 Karlsruhe 1(DE)

(54) Lichtwellenleiter-Spleissklemme.

(57) Lichtwellenleiter-Spleißklemmen müssen in großer Anzahl eingesetzt werden. Es ist daher erforderlich, daß die Spleißklemmen eine einfache Montage zulassen und daß deren Herstellung auch billig ist.

Beide Forderungen werden durch die erfindungsgemäße, äußerst preiswert herstellbare Spleißklemme erreicht, die die zu verbindenen Lichtwellenleiter zwischen einer mit mindestens einer Führungsnut versehenen Basisplatte und einer hierauf klappbaren Druckplatte mit federnden Klemmplatten eindeutig führt und federnd fixiert und außerdem eine einfache Montage ermöglicht.

Fig. 6

EP 0 285 803 A2

## Lichtwellenleiter-Spleißklemme

Die Erfindung betrifft eine Lichtwellenleiter-Spleißklemme zum Verbinden jeweils zweier Lichtwellenleiter (LWL) eines LWL-Paares oder einer Mehrzahl solcher LWL-Paare, so, daß die LWL bei jeweils aneinanderstoßenden oder sich in einem festgelegten Abstand voneinander befindlichen Stirnflächen und gleichlaufenden Achsen sicher fixiert sind, bestehend aus zwei über ein Gelenkband miteinander verbundenen Platten und einer jenseits des Gelenkbandes angeordneten Schließe, wobei in den Platten Führungsnuten für die Lichtwellenleiter vorgesehen sind.

Derartige LWL-Spleißklemmen dienen zum Verbinden von Lichtwellenleitern in einem Leitungszug. Da Lichtwellenleiter aus praktikablen Gründen nicht beliebig lang gefertigt werden können und da auch kürzere Längen dieser Lichtwellenleiter aus wirtschaftlichen Gründen zusammenzufügen sind, müssen solche Spleißklemmen sehr oft eingesetzt werden. Das Verbinden der Lichtwellenleiter durch derartige Spleißklemmen muß daher sehr einfach, möglichst von zuverlässigen Hilfskräften, ausgeführt werden können; außerdem muß deren Fertigung auf wirtschaftliche Art und Weise möglich sein.

Trotz der geforderten einfachen Montage müssen die zu verbindenden Lichtwellenleiter so geführt werden, daß möglichst geringe Verluste auftreten, was bedingt, daß die Lichtwellenleiter auf jeden Fall mit gleichlaufenden Achsen zu verbinden sind. Zum Überprüfen des Stirnflächenabstandes sollte zudem die Verbindungsstelle einsehbar sein. Weiter soll auch die Möglichkeit bestehen, die Verbindungsstelle mit einer Kunstharzmasse zu vergießen, um die Verbindung zu stabilisieren.

Bei einer bekannten derartigen Spleißklemme nach der DE-PS 25 57 660 sind in zwei aufeinanderklappbare Platten jeweils Führungsnuten für die Lichtwellenleiter angebracht. Zur Montage werden in diese aufeinanderzuklappenden Platten jeweils die zu verbindenden LWL eingelegt und so geschnitten, daß die Stirnflächen beim Aufeinanderklappen der Platten sich gegenüberliegen beziehungsweise aneinanderstoßen. Trotz der einfachen Gestaltung dieser Spleißklemme ist deren Montage doch recht schwierig, da die Lage der Lichtwellenleiter erst dann fixiert ist, wenn die beiden Platten aufeinandergeklappt sind. Zu bemängeln ist insbesondere, daß die sichere Fixierung der Lichtwellenleiter in den Nuten nicht gewährleistet ist, da sich diese starren Nuten nicht den Durchmessertoleranzen der Lichtwellenleiter anpassen können. Außerdem ist eine Überprüfung der Lage der Lichtwellenleiter nicht möglich.

Nach der Erfindung ist eine einfache Herstellbarkeit einer derartigen LWL-Spleißklemme wie auch eine einfache Montagemöglichkeit dadurch erreicht, daß, im Gegensatz zu der bekannten Spleißklemme, lediglich in einer der Platten mindesten eine Führungsnut für die Lichwellenleiter und in der jenseitigen Platte eine auf den jeweiligen Lichtwellenleiter aufdrückbare federnde Klemmplatte vorgesehen ist und daß an den Einführseiten der Platten Halterungen für die zu verbindenden umhüllten Lichtwellenleiter angebracht sind.

Nicht mehr also wie bei der bekannten Vorrichtung werden die Lichtwellenleiter in Nuten eingelegt und in diesen Nuten mehr oder weniger gut gesichert, sondern diese Lichtwellenleiter werden lediglich in eine nur in einer der Platten vorgesehenen Führungsnut eingelegt und durch in der jenseitigen Platte vorgesehene federnde Klemmplatten in dieser Lage gehalten. Das Einlegen der Lichtwellenleiter in die Führungsnut ist ohne Schwierigkeiten möglich und kann visuell überwacht werden. Einfach durch ' Aufeinanderklappen der beiden durch ein Gelenkband verbundenen Platten wird dann dieser Zustand fixiert, da sich beim Schließen dieser Platten die federnden Klemmplatten auf die Lichtwellenleiter auflegen. Damit kann eine derartige Verbindung auch von Hilfskräften in sehr kurzer Zeit durchgeführt werden.

Die gesamte Spleißklemme kann aus federnd nachgiebigem Material, entweder, bei Verwendung von Metallbändern, gestanzt, oder bei Verwendung von Kunststoff, gespritzt werden. Die Materialkosten wie auch die Herstellkosten sind daher äußerst niedrig.

Insgesamt ergibt sich damit eine Lichtwellenleiter-Spleißklemme, die sowohl einfach zu montieren, wie auch billig herstellbar ist.

Zu der einfachen Montage trägt bei, daß die Halterungen beim Aufeinanderklappen der Platten jeweils die Umhüllung der zu verbindenden Lichtwellenleiter erfassen. Hierbei können die Halterungen bereits in den Außenmantel der Lichtwellenleiter eindringende Zacken ect. aufweisen, so daß ihre Lage beim Eindrücken in die Zacken über die Zeit der Mcntage gesichert ist.

Als recht zweckmäßig hat es sich erwiesen, daß die Verbindung der Lichtwellenleiter innerhalb der erfindungsgemäßen Spleißklemme - schwimmend erfolgt. Dies wird dadurch erreicht, daß die Führungsnut in einer von der Platte herausgetrennten Zunge angebracht ist und daß auch die Klemmplatten längs der quer zu der Lichtwellenleitern liegende, aus der Platte herausgetrennte Federzungen sind.

Um eine eindeutige Lage der zu verbindenden Lichtwellenleiter zu erreichen, wird nach der Erfindung vorgeschlagen, daß die Führungsnut einen parabelförmigen freien Querschnitt aufweist, wobei der Halbparameter der Parabel gleich oder geringfügig kleiner als der Radius der zu verbindenden Lichtwellenleiter ist. Ist der Halbparameter gleich, schmiegt sich der Lichtwellenleiter mit seiner Rundung an den Untergrund der parabelförmigen Führungsnut an. Ist der Halbparameter kleiner als der Radius des Lichtwellenleiters, so ergibt sich eine tangentiale Anpressung der Lichtwellenleiter an die Flanken dieser Führungsnut, so daß sich auch dann wieder eine eindeutige Lage der Lichtwellenleiter ergibt. Damit ist nicht nur ein sicherer Halt der Lichtwellenleiter in den Führungsnuten gegeben, sondern auch der Gleichlauf der Achsen der zu verbindenden Lichtwellenleiter erreicht. Außerdem ist durch diese Schlitze eine Sichtkontrolle der Verbindungsstelle, wie auch ein Vergießen dieser Verbindungsstelle möglich.

Auf den Zeichnungen sind Ausführungsbeispiele des Erfindungsgegenstandes schematisch dargestellt, und zwar zeigen:

Fig. 1 die perspektivische Darstellung einer zwei Lichtwellenleiter verbindenden Spleißklemme,

Fig. 2 die "Offen"-und

Fig. 3 die "Geschlossen"-Stellung und

Fig. 4 einen Teilquerschnitt bei der Führungsnut,

Fig. 5 eine weitere mögliche Ausführungsform,

Fig. 6 eine Mehrfach-Spleißklemme und

Fig. 7 eine Seitenansicht der Fig. 6.

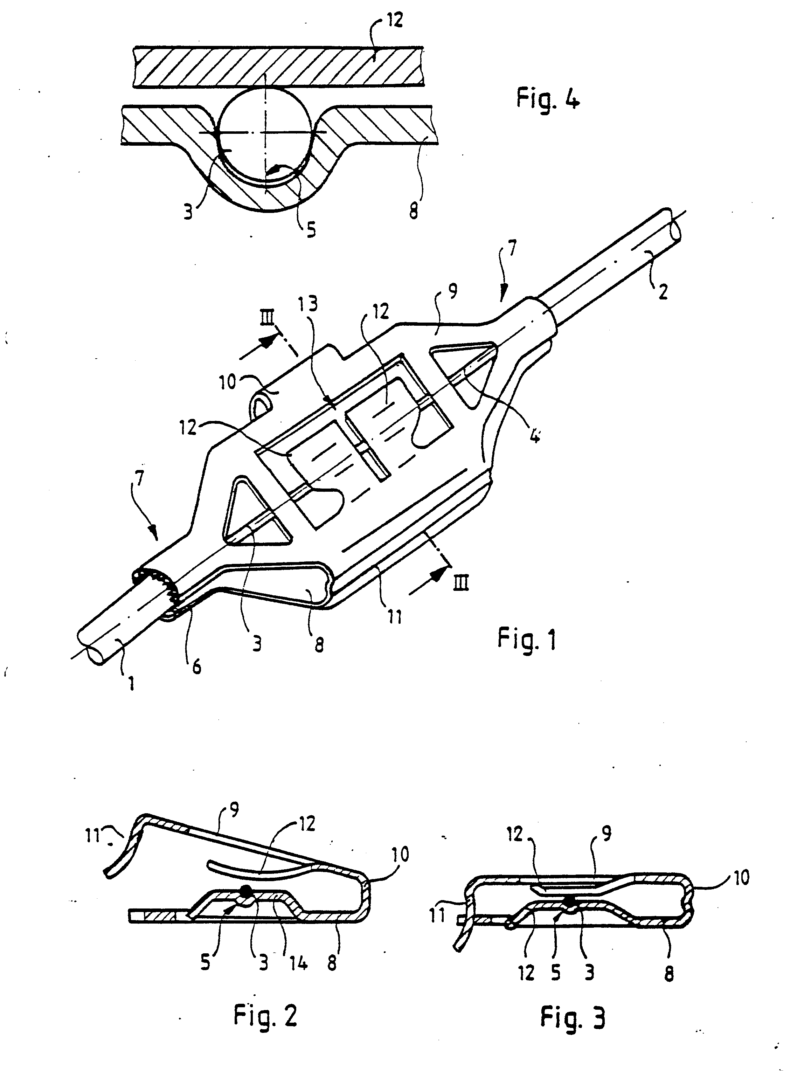

Nach den Fig. 1 bis 4 sollen zwei Lichtwellenleiter 1, 2 sollen miteinander verbunden, das heißt, "gespleißt" werden. Bei der Verbindung muß darauf geachtet werden, daß kein Achsenversatz auftritt und daß auch zwischen den Achsen der Lichtwellenleiter kein Kippwinkel entsteht. Außerdem müssen die beiden Stirnflächen der Glasfasern dieser Lichtwellenleiter entweder ohne Abstand aufeinander oder in einem festgelegten Abstand voneinander liegen. Um sowohl einen Achsenversatz, wie auch einen Kippwinkel auszuschließen, werden die Glasfasern 3, 4 in eine Führungsnut 5 mit einem parabelförmigen freien Querschnitt eingelegt und die LWL 1, 2 mit ihrem Mantel in Dorne 6 von Halterungen 7 eingedrückt. Dadurch sind die Glasfasern vorläufig fixiert, wobei allerdings noch dafür gesorgt werden muß, daß die Stirnflächen auch tatsächlich aneinanderstoßen oder sich in einem festgelegten Abstand voneinander befinden. Ist dies der Fall, können die die Spleißklemme bildenden beiden Platten, Basisplatte 8 und Druckplatte 9, die über ein Gelenkband 10 miteinander verbunden sind, aufeinandergeklappt und mittels einer Schließe 11 in dieser Lage festgesetzt werden. In dieser Stellung drücken federnde Klemmplatten 12 auf die Glasfasern 3, 4 mit einer durch die Materialwahl dieser Klemmplatten bestimmten Kraft und drücken damit die Glasfasern 3, 4 in die Führungsnut 5 hinein, wie dies Fig. 4 zeigt. Die korrekte Lage der Glasfasern kann nach der Montage durch den Schlitz 13 überprüft werden. Außerdem kann die gesamte Spleißklemme auch noch durch Kunststoff vergossen werden, so daß die korrekte Lage der Glasfaserenden zueinander zusätzlich gesichert und gegen Verschmutzung geschützt ist.

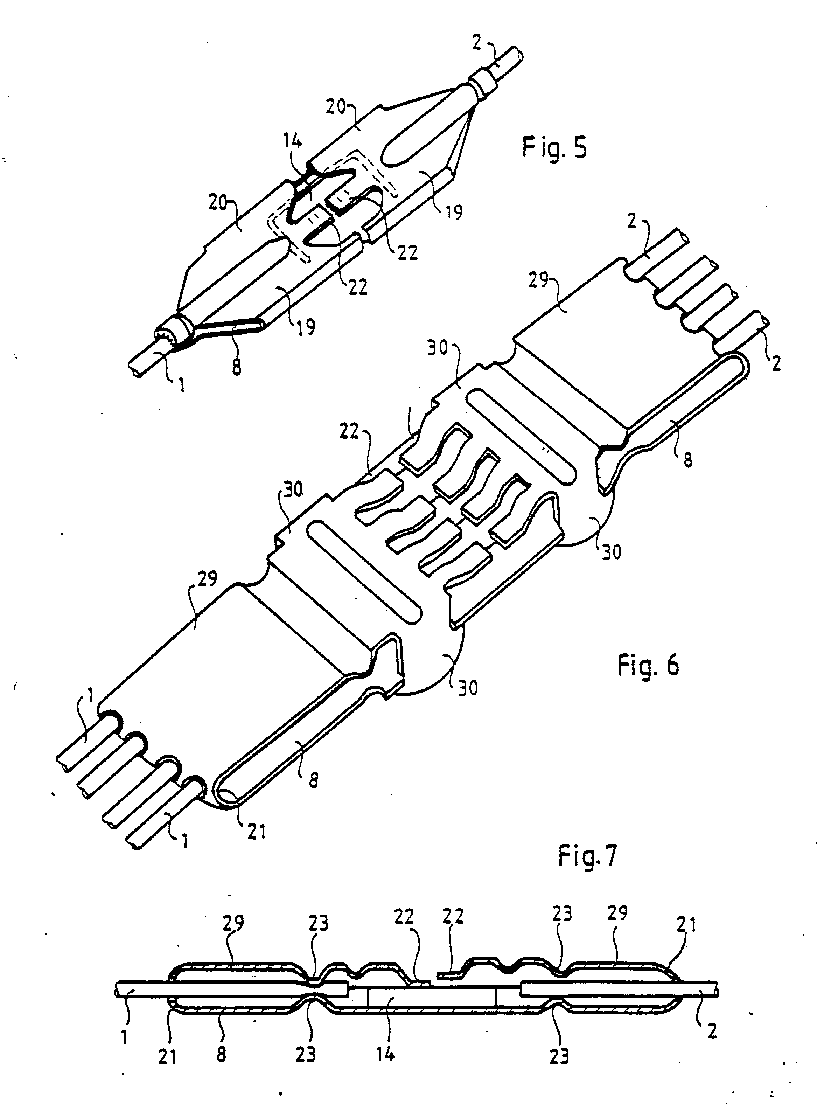

Fig. 5 zeigt eine Spleißklemme, die im wesentlichen aufgebaut ist wie die Spleißklemme nach Fig. 1, wobei jedoch die Druckplatte quer zur Längserstreckung der Lichtwellenleiter 1, 2 in zwei Teildruckplatten 19 unterteilt ist, die jeweils mit einer zugehörigen Schließe 20 auf die Basisplatte 8 aufgedrückt werden können. Hierbei legen sich längsverlaufende Klemmplatten 22 auf die Glasfasern auf und drücken sie in die Führungsnut, die beispielsweise in Fig. 4 dargestellt ist. Diese Führungsnut 5 befindet sich auf einer aus der Basisplatte 8 herausgetrennten Zunge 14, ähnlich wie dies auch die Fig. 2 und 3 zeigen.

Fig. 6 schließlich zeigt eine Mehrfach-Spleißklemme, mit der in diesem Beispiel vier ankommende Lichtwellenleiter 1 mit vier abgehenden Lichtwellenleitern 2 verbunden werden können. Auch hier sind längsverlaufende Klemmplatten 2 vorgesehen, die Glasfasern in die entsprechenden Führungsnuten 5 eindrücken. Erwähnenswert bei dieser Spleißklemme ist, daß die Klemmplatten 22 beim Schließen der Spleißklemme eine geringe zur Mitte der Spleißklemme gerichtete Verschiebebewegung ausführen, und somit die Glasfaserenden aufeinander zu bewegen beziehungsweise sicher aufeinanderpressen.

Fig. 7 zeigt einen Längsschnitt durch diese Mehrfach-Spleißklemme, aus der auch die Lage der Gelenkbänder 21 wie auch von Sicken 23 ersichtlich sind, die beim Schließen der Klemme die Umhüllung der Lichtwellenleiter 1, 2 ergreifen und fixieren.

## Ansprüche

1. Lichtwellenleiter-Spleißklemme zum Verbinden jeweils zweier Lichtwellenleiter (LWL) eines LWL-Paares oder einer Mehrzahl solcher LWL-Paare, so, daß die Lichtwellenleiter bei jeweils aneinanderstoßenden oder sich in einem festgelegten Abstand voneinander befindlichen Stirnflächen und gleichlaufenden Achsen sicher fixiert sind, bestehend aus zwei über ein Gelenkband miteinander verbundenen Platten und einer jenseits des Gelenkbandes angeordneten Schließe, wobei in den Platten Führungsnuten für die Lichtwellenleiter vorgesehen sind,

dadurch gekennzeichnet
daß lediglich in einer der Platten (Basisplatte 8) mindestens eine Führungsnut (5) für die Lichtwellenleiter (1, 2) und in der jenseitigen Platte (Druckplatte 9) eine auf den jeweiligen Lichtwellenleiter (1, 2) aufdrückbare federnde Klemmplatte (12) vorgesehen ist und daß an den Einführseiten der Platten (8, 9) Halterungen (7) für die zu verbinden den umhüllten Lichtwellenleiter (1, 2) angebracht sind.

2. Spleißklemme nach Anspruch 1,
dadurch gekennzeichnet,
daß die Führungsnut (5) in einer von der Platte (8) herausgetrennten Zunge (14) angebracht ist.

3. Spleißklemme nach Anspruch 1, oder 2,
dadurch gekennzeichnet,
daß die Führungsnut (5) einen parabelförmigen freien Querschnitt aufweist, wobei der Halbparameter der Parabel gleich oder geringfügig kleiner als der Radius der zu verbindenden Lichtwellenleiter (1, 2) ist.

4. Spleißklemme nach Anspruch 1,
dadurch gekennzeichnet,
daß die Klemmplatte (12, 22) eine quer oder in Längsrichtung zum LWL (1, 2) liegende, aus der Platte (9) herausgetrennte Federzunge ist.

5. Spleißklemme nach Anspruch 1,
dadurch gekennzeichnet,
daß die Halterungen (7) beim Aufeinanderklappen der (8, 9) jeweils die Umhüllung der zu verbinden den Lichtwellenleiter (1, 2) erfassen.

6. Spleißklemme nach einem oder mehreren der vorhergehenden Ansprüche,
dadurch gekennzeichnet,
daß die die Klemmplatte(n) (12, 22) aufweisende Druckplatte (9) bei der Stoßstelle der Lichtwellenleiter (1, 2) quer zur Lage der Lichtwellenleiter (1, 2) geteilt und die Plattenteile jeweils mit einer Schließe (10, 20, 30) versehen sind.

7. Spleißklemme nach einem oder mehreren der vorhergehenden Ansprüche,
dadurch gekennzeichnet,
daß sie aus federnd nachgiebigem Material, aus Metall oder Kunststoff, ist.

Fig. 4

Fig. 1

Fig. 2

Fig. 3

0 285 803

Fig. 5

Fig. 6

Fig. 7